# EUROPEAN PATENT SPECIFICATION

(11) **EP 2 829 819 B1**
(45) Date of publication and mention of the grant of the patent: **02.03.2016**
(21) Application number: 13425108.1
(22) Date of filing: 25.07.2013
(51) Int. Cl.: F24H 4/04, F24H 9/20, F25B 1/10, F25B 9/00, F25B 13/00, F25B 40/00

(54) **Heat-pump water heater for domestic purposes**
Wärmepumpenwassererhitzer für Haushaltszwecke
Chauffe-eau à pompe à chaleur à usage domestique

(43) Date of publication of application: 28.01.2015
(73) Proprietor: IMAT S.p.A., 33074 Fontanafredda (PN) (IT)
(72) Inventor: Driussi, Diego, 33074 Fontanafredda (PN) (IT)
(74) Representative: Giugni, Diego

(56) References cited:
- EP-A1- 1 475 576
- EP-A2- 1 826 510
- WO-A1-2007/043952
- GB-A- 2 228 560
- US-A- 4 363 221

## Description

### TECHNICAL FIELD OF INVENTION

The present invention is relative to the field of water heaters for domestic purposes using heat pumps, in particular heat pumps using carbon dioxide (CO₂) as the working fluid.

### BACKGROUND OF THE INVENTION

The conventional heat-pump water heating systems for domestic purposes include essentially: a water storage tank thermally connected to a heat-pump circuit provided with a first water/refrigerant heat exchanger (which can be multiple) or condenser, a thermal expansion valve, a second refrigerant/water-air heat exchanger (or evaporator), and a compressor.

In these systems, the refrigerant circulating in the heat pump circuit is usually of synthetic nature (generally hydrofluorocarbons) or of natural origin, such as R290 (propane), R600a (isobutane) and R744 (CO₂). The use of synthetic refrigerants has been for some time the subject of debate due to their heavy impact on the environment. Conversely, the use of natural refrigerants is particularly sought-after both for environmental reasons and economic reasons. However, not all the natural refrigerants make it possible to achieve a high coefficient of performance (for heat pumps it is the COP, the relationship of energy generated and energy absorbed), that is, higher than 3, such as to make the system advantageous from the point of view of energy consumption.

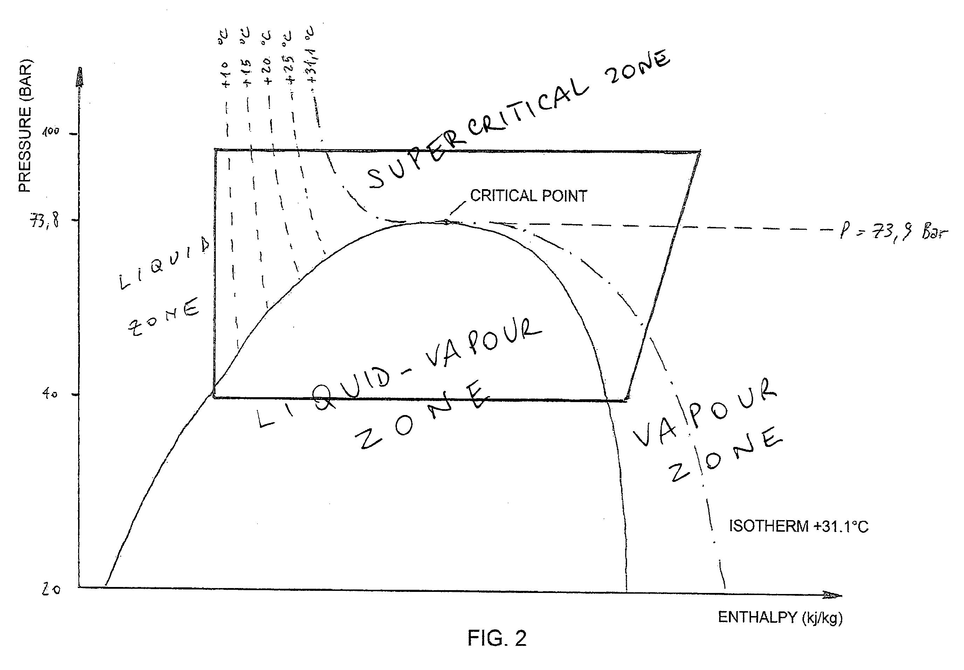

The choice of CO₂ would be desirable, as it is an economic, non-toxic and nonpolluting gas that potentially reaches high temperatures when it is compressed. However, such a fluid, if it is used in systems based on vapour compression as is the case with heat pumps, makes it possible to achieve high COP values only if particular thermo-physical conditions are met, particularly before the thermal expansion. In fact, if, as is desirable, the advantageous conditions of the thermodynamic behaviour of a synthetic fluid are approached, the temperature of the CO₂ should not exceed the critical value of 31.1°C and the pressure should not exceed the critical value of 73.8 bar. Unfortunately, such a low critical temperature does not make it possible to obtain a very high water temperature and at the same time the power of the system, that is, the water heating capacity, would be limited. For this reason, a supercritical thermodynamic cycle is used. As shown by the graph of Figure 2, the fluid remains in the hot gaseous state during the heat exchange with the cold water coming from the tank (and thus not condensation), and the fluid becomes liquid and cold only after said exchange and after the passage through the thermal expansion valve.

The conventional heat pump heaters working with the above-mentioned principle can be ranked in two main types:
1) heaters with a heating coil:
   - placed inside the storage tank, so that the heat exchange takes place directly between the coil, with refrigerant at a high temperature flowing through it, and water, thus generating convection currents that cause the mixing of the water, or
   - placed in contact with the external surface of the tank, wherein said convection currents are generated on the inside wall of the tank;
2) heaters with a heat exchanger (normally, but not exclusively, of plate type) outside the tank, and a water circulation pump.

With the first type of heater, convective movements are created inside the mass of water that cause a mixing of the water, thus giving a homogeneous temperature in every part of the mass of water. If this process is achieved with a CO₂ heat pump, the thermodynamic efficiency of the system would be very low. In fact, when the mixed water reaches said value of 31.1 °C, the CO₂ will have to be brought to a much higher temperature and pressure in order to guarantee an efficient heat exchange and, therefore, heat the water to the conventional working temperature, that is, around 50°C or above. But, obviously, the higher the temperature of the water, the more it is necessary to raise the temperature and the pressure of the CO₂. This all requires supplying a large quantity of electric power to the compressor, which is subjected to heavier work loads as the temperature of the water rises. The large energy consumption thus becomes evident.

A further disadvantage of this type of heater is due to the fact that its maintenance becomes difficult, particularly owing to the immersion coils.

With the second type of heater, the above technical problem can be more easily solved because the CO₂ before expansion can be maintained at a temperature lower than the critical value, thus creating a gradient or stratification of the temperature of the water inside the storage tank. In particular, in the lower part of the tank there must be cold water, that is, at about the same temperature as the water from the supply mains (about 15-20°C), while from the bottom up the water temperature increases abruptly up to maximum values as high as 80°C. It is thus necessary to create a stable presence of two masses of water, a warm one in the upper part and a cold one in the lower part; a marked temperature gradient forms in the intermediate zone, and the thickness of this interface layer, referred to as thermocline, must be as shallow as possible.

In this manner, by drawing cold water from the lower part of the tank and supplying it constantly to the heat exchanger in the opposite direction of flow of the hot CO₂, the system can operate without being forced to increase the power of the compressor to deal with the increase of the CO₂ temperature.

In order to guarantee such layering and particularly its constant maintenance, it is however necessary to draw the cold water from the lower part of the tank and pump it inside the heat exchanger before being returned into the tank from above through a hydraulic pump. This pump will however necessarily have to operate at a very low flow rate so as not to alter the arrangement of the masses of warm and cold water. As an alternative, special tanks equipped with a finely controlled water reintroduction system can be used.

In each case, this solution also requires particular technical expedients and involve a certain complication in the heating system. Moreover, the COP of the system is still lowered due only to the fact that it is necessary to feed the hydraulic pump.

A heater of this type is described in the Japanese patent application JP2002372318, in which the compressor is surrounded by the heat exchanger (gas cooler) so as to cool it to avoid overheating due to the use of CO₂. In addition, at least one hydraulic pump is foreseen to draw the cold water from the lower part of the tank and push it through the heat exchanger before being reintroduced in the upper part of the tank. A heater according to the preamble of claim 1 is known from EP 1 475 576 A1.

Systems alternative to the one just described include the arrangement of multiple tanks connected in series in order to obtain said stratification. Obviously, such an arrangement is rather cumbersome and complicated, especially for domestic uses, and in any case a hydraulic pump is always required to circulate the water through the heat exchanger of the heat pump.

### SUMMARY OF THE INVENTION

The main purpose of the present invention is to realize a CO₂ heat-pump water heater for domestic purposes that makes it possible to achieve a relatively high COP (coefficient of performance), approaching the COP of systems using synthetic cooling gases or other natural fluids.

A further purpose of the present invention is to reduce the excessive circuit complexity of the prior art systems, in particular by eliminating water circulation pumps and the necessity of multiple tanks.

A first objective of the present invention is therefore a water heater for domestic hot water purposes based on a heat pump of CO₂ type.

A second objective is a method of heating household water by means of a heat pump heater of CO₂ type.

These purposes and objectives are achieved with a device and a method according to the invention, the technical characteristics of which are defined in the claims accompanying the present specification.

### BRIEF DESCRIPTION OF THE DRAWINGS

Characteristics and advantages of the invention will become evident from the description which follows, by way of non-limiting example, with reference to the enclosed drawings, in which:
- figure 1 illustrates a circuit diagram of the device according to the invention;
- figure 2 illustrates the graph of the thermodynamic cycle of the device according to the invention;
- figures 3A and 3B illustrate, respectively, the graph of the time-based temperature variation of the working fluid and the graph of the time-based power variation and pressure of the relative fluid of the heat pump according to the invention, with continuous control of the thermal expansion valve;
- figures 4A and 4B illustrate, respectively, the graph of the time-based temperature variation of the working fluid and the graph of the time-based variation in the power of the heat pump and in the pressure of the relative working fluid of the device according to the invention, with the thermal expansion valve not controlled.

### DETAILED DESCRIPTION OF THE INVENTION

The basic idea of the present invention stems from the observation that the convective movements must be brought to the outside of the storage tank so that a stable stratification is created, thanks to the lower density of the warm water compared to the cold water, in order to have, on one hand, warm water immediately available and to enable on the other hand the thermodynamic system of the pump to operate in an efficient manner, thus achieving a considerably lower energy consumption. In other words, the coefficient of performance (COP) reaches relatively high values because the exchanger is fed with cold water.

To achieve this result, the heat exchanger was placed in a particular position with respect to the tank, and dimensional and flow rate solutions involving the path of the water were thought out and, preferably, the provision of a system for controlling the temperature of the CO₂ on outflow from the heat exchanger.

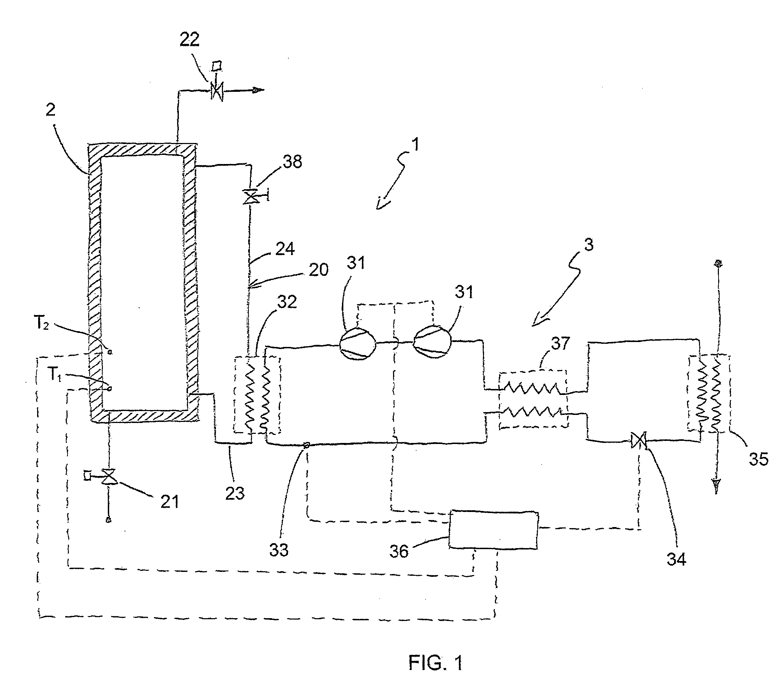

In particular, the heater for domestic purposes based on a heat pump of CO₂ type according to the invention, shown schematically in Figure 1 with reference numeral 1, comprises a storage and water supply tank 2 and a heat pump 3 which in turn comprises: at least one compressor 31 for the CO₂ working fluid, a CO₂/water heat exchanger 32 operatively connected at one side with the heat pump circuit and on the other side, in countercurrent, to a duct 20 for the external circulation of the water from the lower portion to the upper portion of said tank 2, a thermal expansion valve 34, a further CO₂/water-air heat exchanger 35, and a controller 36.

It should be noted that in the following description the general terms high, low, upper, lower and other similar general terms refer to a heater and to its individual components when in use. Further, since the operation of the heater is based on the principle of convection of fluids, above or upper always refer to the position occupied by the warm water, being less dense than the cold, and thus denser, water.

The tank 2, according to a characteristic of the invention must be tall and narrow. Accordingly, the ratio of the transversal diameter to the height of the tank must be greater than 1:5, assuming that the cross section of the tank is circular or similar to a circle. Preferably, the tank 2 is cylindrical, with a cross-sectional diameter of at least 1:6 - 1:8 of the height. According to a particularly preferred embodiment of the invention, the tank has a cylindrical cross section with a height of 2000 mm and a cross-sectional diameter of 250 mm.

In addition, the tank is internally provided with at least two temperature sensors T1 and T2, the first of which T1 being placed near the bottom of the tank to detect the temperature values of the cold water in that area, and the second sensor T2 being placed halfway up in the tank. Additional sensors (not shown) can be placed for example in the upper portion of the tank to detect the maximum temperature of the warm water and any stratification at every level of the tank. Each sensor is then connected to a controller 36, as will be explained later.

The tank 2 is supplied from below through a water duct coming from the supply main and is provided with a valve 21, and is emptied from its upper end through a duct provided with a valve 22.

The tank 2 is connected to the heat exchanger 32 of the heat pump 3 through a first branch 23 of the duct 20 that originates toward the bottom of the tank and ends at the lower portion of the heat exchanger 32.

A second branch 24 of the duct 20 departs from said upper portion of the heat exchanger 32 and ends at the upper portion of the tank 2.

In particular, the first branch 23 and the second branch 24 have an inside diameter between 20 mm and 200 mm, preferably between 30 mm and 100 mm. This forms a closed circuit for the flow of water from the lower portion of the tank to its upper portion through the heat exchanger 32 of the heat pump 3.

Advantageously, the heat exchanger 32 of the heat pump 3, according to the present invention, is positioned below the point of the halfway level of the tank. As will be explained in detail later, this position, together with the dimensional characteristics of the tank 2, the diameter of the first and the second branches 23 and 24 of the water circulation duct 20 and, preferably, the control of the temperature of the CO₂ on outflow from the heat exchanger 32, makes it possible to create a natural convection flow from the lower portion of the tank upwards through the heat exchanger. This results in the formation of a temperature gradient of the water in the tank by effect of the lower density of the warm water with respect of the cold water. Preferably, the heat exchanger 32 is positioned at a level lower than the tank. More preferably, it is made up of at least one pair of heat exchangers arranged parallel to each other to reduce any load losses.

The heat exchanger is represented by a conventional device, for example of double-pipe type, a shell and tube heat exchanger, a plate-type heat exchanger, a laminar heat exchanger, a spiral plate exchanger; preferably, it is a plate-type heat exchanger with exchange in countercurrent to the CO₂, which flows into the tank from above and flows out from below.

Upstream of the heat exchanger 32 with respect to the flow of the CO₂ is positioned at least one compressor 31 of conventional type. Advantageously, thanks to the construction of the heater of the invention, the compressor has an electric power lower than 30 kW. Preferably, two low power compressors (of 0.1 to 0.5 kW) are used to achieve a compression of the CO₂ fluid in two stages.

Upstream of the compressor 31, the circuit of the heat pump is provided with a further CO₂/water heat exchanger 35 or CO₂/air heat exchanger. Both solutions are widely known to a person skilled in the field, and thus they will not be discussed further.

Moreover, upstream of said further exchanger 35 is positioned an expansion valve, generally made up of a thermal expansion valve or simply a capillary, both of them completely of conventional type.

Advantageously, in agreement with a preferred embodiment, the heat pump 3 of the heater 1 according to the present invention also comprises a system for controlling the temperature of the CO₂ flowing from the heat exchanger 32. This system includes a temperature sensor 33 positioned on the outflow duct from the heat exchanger 32. The sensor is in turn connected to a controller 36 capable or receiving from the sensor an electric signal representing a temperature value. Based on a program loaded on the controller, a drive signal is sent to the thermal expansion valve 34 to control the pressure of the CO₂ and the inflow rate into the compressor, as will be described later.

The controller 36 is further also connected to each of the sensors T1 and T2 of the tank to detect variations in the stratification of the temperature of the water.

A further connection is made between the controller 36 and the compressor 31 to allow the actuation and the shutdown of the same, depending on whether the conditions of equilibrium of the temperatures in the tank are achieved, as described in detail later.

The operation of the inventive heater 1 will now be described.

Thanks to the use of CO₂ as the working fluid, the compressor 31 can send the fluid under pressure to the upper portion of the heat exchanger 32 at temperatures even higher than 80°C. Therein takes place the heat exchange with the cold water, at around 15-20°C, that comes from the lower portion of the tank 2 through the branch 23 and enters into the exchanger through its lower part, that is, against the flow of the CO₂.

In these conditions and thanks to the fact that the heat exchanger 32 is positioned near the cold portion of the tank, the newly heated water becomes less dense than the cold water, and consequently, due to the natural effect of convection, tends to rise along the branch 24 to flow into the upper portion of the tank. The particular diameter of the duct chosen favours the convection.

Once convection is started, the cold water from the bottom of the tank will be automatically drawn toward the heat exchanger, where it undergoes the same cycle just described above.

In a parallel manner, the cooled CO₂ flows out of the lower portion of the heat exchanger and, in agreement with the graph of figure 2, it becomes liquid due only to the cooling effect, with pressure remaining equal.

At this point, in agreement with a conventional cycle of a heat pump, the CO₂ passes through a further heat exchanger 35, where it absorbs heat from the air or from the water and returns to the gaseous state.

From this heat exchanger 35, the CO₂ returns to the compressor 31 to resume the cycle.

The cycle just described may also include a passage of the CO₂ through a regenerative CO₂/CO₂ heat exchanger, shown in figure 1 with the reference numeral 37, in a completely conventional manner and positioned so as to intercept the circuit of the heat pump 3 before the thermal expansion valve on one side and before the compressor on the other.

The convective process just described and the cycle of the CO₂ continue until equilibrium is reached with the heater, which takes place when in the storage tank remain only a few centimetres of cold water on the bottom. The first temperature sensor T1 senses the temperature climb near the bottom and sends a signal to the controller 36, which in turn blocks the operation of the heat pump.

It should be noted that the tank remains under pressure, and any hot water drawn out of the upper portion of the tank will be compensated by a replenishment of cold water supplied through the bottom of the tank and coming from the water main. This control will be performed through the controller 36 with suitable sensors (not shown) positioned inside the tank.

The cold water fed under pressure from the water main will push the hot water upward, but the two masses will still remain separate.

The heater will resume its operation when the second sensor T2 placed at halfway height in the tank, intercepting the mass of cold water that tends to rise, will send a signal to the controller, which then starts the heat pump.

Preferably, simultaneously with the control and adjustment of the temperature of the water in the tank, the thermodynamic cycle of the CO₂ in the heat pump is also controlled in such a manner that the temperature of the working fluid flowing out of the heat exchanger 32 is always below the critical temperature (31.1 °C) and higher than that of the water from the water main (generally 15-20 °C). For this purpose, the sensor 33 positioned below the level of the heat exchanger 32 controls the temperature of the CO₂.

It was found experimentally, as is shown by the following example, that, initially, when the temperature of the water to be heated is low, the power to input to generate the natural circulation is lower than the power necessary to maintain the temperature of the warm water when the process is already in progress.

Further, since the thermal power that can be supplied is correlated with the electric power absorbed by the compressor, the fact of being able to vary the flow rate of the working fluid makes it possible to control the pressures of the circuit and consequently the power input. This variation of the flow rate is advantageously achieved by means of the thermal expansion valve 34, which, through the controller 36 which in turn receives signals from the sensor 33, is driven so that it opens to decrease the pressure of the CO₂ downstream of the compressor, and thus the compressor absorbs less electric power because the counterpressure to overcome is lower. Conversely, the thermal expansion valve is closed to increase the pressure of the CO₂ downstream of the compressor, and therefore the compressor absorbs more electric power because the counterpressure to overcome is higher.

According to a preferred embodiment of the invention, the heater 1 includes a valve 38 to control the flow of warm water entering into the upper portion of the tank. This valve is positioned so as to intercept the branch 24 near the upper portion of the tank 2.

The function of the valve 38 is to enable the variation of the (natural) circulation of the water and consequently the temperature of the water that is fed into the tank after being heated. Advantageously, therefore, if there is a need to supply hot water at a very high temperature (even higher than 80°C), it is sufficient to partly close the valve 38, thus slowing the natural upward flow of hot water. This means that the water flows more slowly through the heat exchanger 32 and, therefore, it tends to warm up more. Vice versa, if there is a need to draw water at a not very high temperature, the valve will be opened to increase the flow, with an effect opposite to the one just described above.

A further objective of the invention concerns a method for heating domestic hot water comprising the steps of:
- providing a water storage and supply tank 2 as previously described and filling it with cold water from the water main;
- connecting said tank to at least one heat exchanger 32 of a CO₂-type heat pump through the two previously described branches 23, 24 of the duct 20, so that the heat exchange between the cold water coming from the bottom of the tank and entering the exchanger from below and the hot CO₂ coming from the compressor and entering through the top of the exchanger, takes place at a level below the halfway height of the tank;
- starting the heat pump so that said heat exchange creates a natural convection movement inside said branches, which in turn makes it possible to obtain inside the tank a constant stratification of the temperature of the water.

Preferably, the connection of the tank to the heat exchanger is made so that the exchange takes place at a level lower than the tank.

Preferably, too, the method includes a step for controlling the temperature of the water near the bottom of the tank so as to switch off the heat pump when the temperature detected reaches a preset value and a step for controlling the temperature at about the halfway height of the tank so that the heat pump is restarted when the temperature detected reaches another preset value. In particular, the temperature of the water sensed at the bottom is higher than or equal to 30°C, while the temperature detected around the halfway height of the tank is equal to or about a couple of degrees higher than the temperature from the water main. It should be noted that in the case in which said temperatures of the water that cause the switching on or off of the heat pump are very close to each other, the system can be controlled by means of pressure switches in a completely similar manner. Obviously, the heater of the present invention will give the best performance if the temperature of the water to be heated is lower than said critical value of 31.1 °C and preferably 10 degrees lower than said critical temperature.

According to a variant of the invention, the method also includes a step for controlling a thermal expansion valve 34 to vary the pressure of the CO₂ flowing out of a compressor 31 of the heat pump 3. Preferably, said step of controlling the expansion valve 34 includes a step of detecting the temperature of the CO₂ flowing out of the heat exchanger 32 whereby, if the temperature detected is equal to or higher than a preset critical value, the thermal expansion valve will be caused to close, whereas if the temperature detected is equal to or lower than another preset critical value, then the thermal expansion valve is caused to open. In either case, since the temperature generally tends to increase, the expansion valve is generally always caused to close.

The detection of the CO₂ temperature is performed by means of a temperature sensor of conventional type, such as for example an NTC (negative temperature coefficient) thermistor or a PTC (positive temperature coefficient) thermistor or a thermocouple. The detected critical values that determine the controls of the thermal expansion valve are lower than 30 °C.

According to a further variant embodiment of the invention, the method also includes a temperature increase phase in the upper portion of the tank achieved by decreasing the quantity of warm water flowing into the tank. In fact, if there is a need to output hot water at a temperature of 80°C or more, the flow rate of hot water input into the upper portion of the tank is decreased. As previously explained, such a decrease causes the slowing down of the flow of water into the CO₂/water heat exchanger, with a consequent longer staying time in the tank. As a result, the water absorbs more heat from the CO2.

### PREFERRED EXAMPLE OF EMBODIMENT OF THE INVENTION

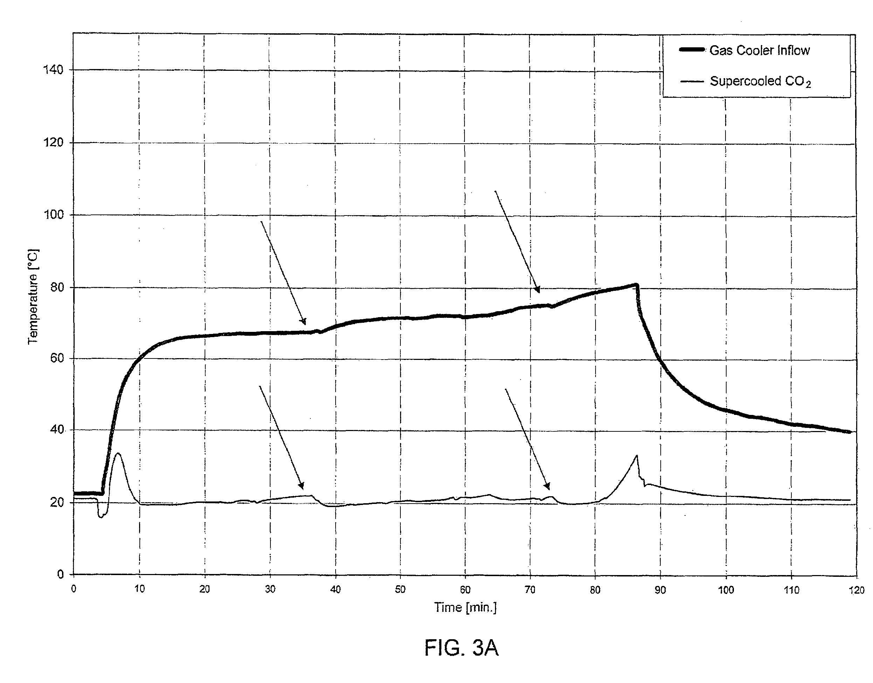

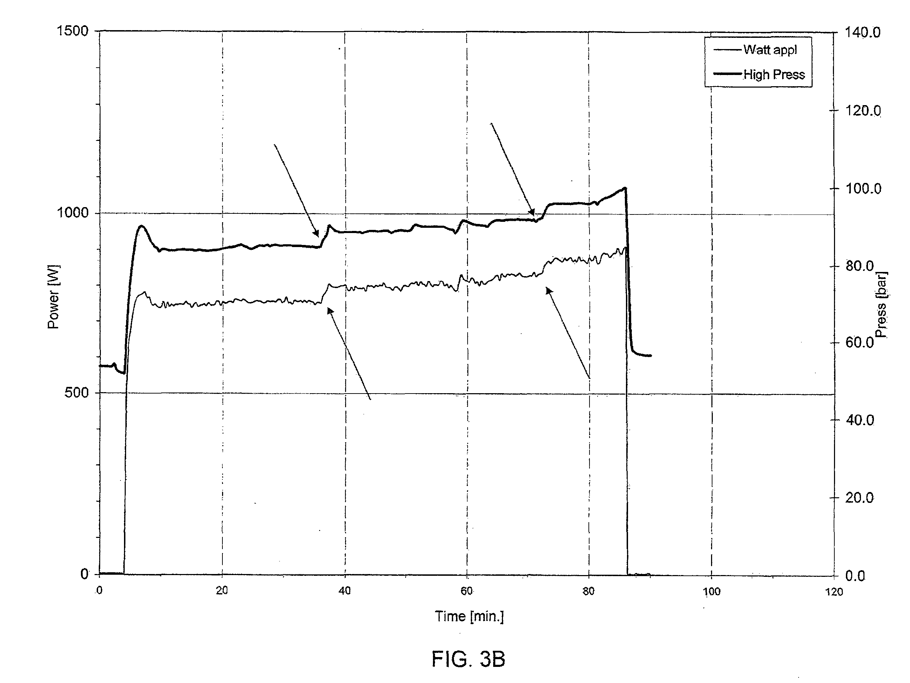

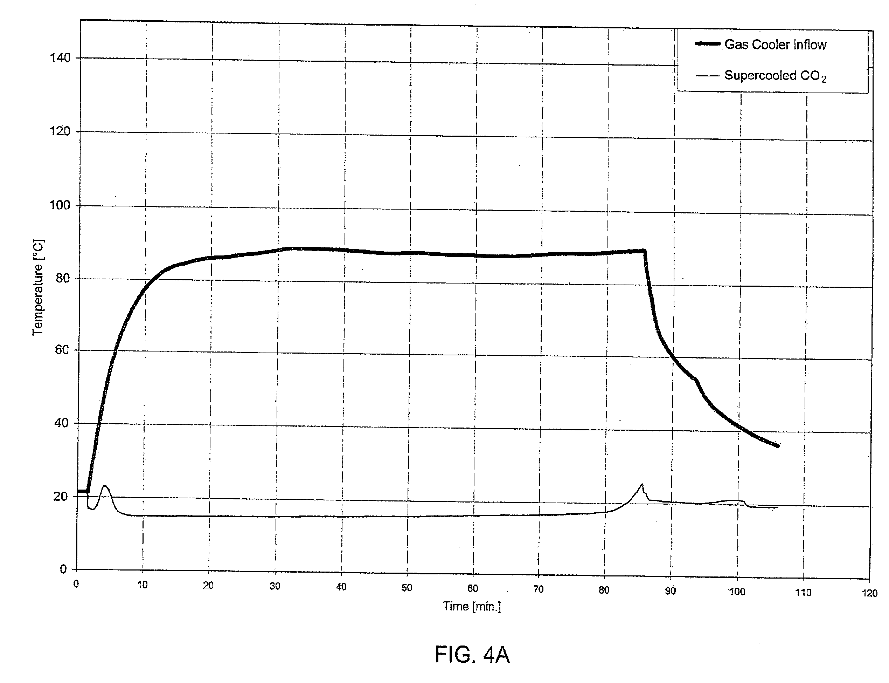

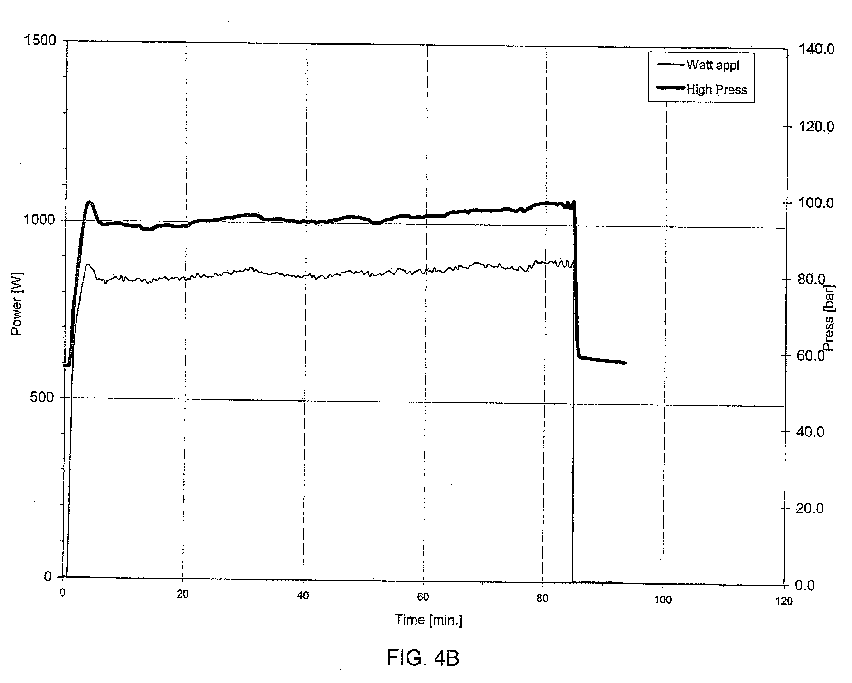

The comparison of the temperature and of the energy delivered by the compressor with the presence of the above control through the thermal expansion valve just described and without such control is shown respectively in figures 3A, 3B and 4A, 4B. In particular, and solely as a non-limiting example of the invention, a heater was used provided with a cylindrical tank having a height of 2000 mm and a transversal diameter of 250 mm, a first heat exchanger 32 positioned just below the tank and made up of a pair of plate-type exchangers positioned parallel to each other, a thermocouple 33 positioned on outflow from the heat exchanger, a regenerative CO₂/CO₂ heat exchanger, an electronic thermal expansion valve 34, a second heat exchanger 35 for CO₂/water heat exchange, a two-stage compressor 31 with an electric power of 1 kW, two branches 23, 24 connecting the lateral wall near the bottom of the lateral wall proximal to the ceiling of the tank 2, passing through the heat exchangers 32, having an inside diameter of 40 mm, and a valve 38 for adjusting the flow of warm water entering into the upper portion of the tank. A controller 36 represented by a drive and control unit such as a PLC, is operatively connected to the electronic thermal expansion valve 34, to the compressor 31, and to the thermocouple 33, as well as to the temperature sensors T1 and T2. The tank 2 is also thermally insulated.

In figure 3A is shown a graph of the trend of the CO₂ temperature on inflow (bold upper line called Gas Cooler Inflow) and outflow from the heat exchanger (thin bottom line called Supercooled CO₂). As can be seen, when the heat pump is actuated, that is, at zero time, the temperature of the CO₂ is slightly higher than 20°C both on inflow and on outflow from the heat exchanger 32. A few minutes after the start of the thermodynamic cycle of the heat pump 3, the temperature of the CO₂ on inflow climbs immediately to about 60°C within 10 minutes after start-up. Afterward, it climbs slowly and gradually up to about 70°C in the following 30 minutes and then it substantially stabilizes. In a parallel manner, the CO₂ on outflow from the first heat exchanger 32, again after a few minute from the start-up of the CO₂ cycle in which the temperature drops and then climbs again, returns to around 20°C, that is, below the critical temperature of 31.1 °C. With the passage of time, the tendency of the temperature is to climb, as is shown by the curve near the 40 minute point.

At this point, the thermocouple 33 detects this tendency of the temperature on outflow from the heat exchanger 32 to climb and sends a signal to the controller 36, which drives the electronic thermal expansion valve 34 so as to cause it to close. As previously explained, after about 40 minutes of operation this causes an increase in pressure downstream of the compressor, which causes it to increase the power necessary to pump the CO₂ to the heat exchanger at a higher pressure (see figure 3B, bold line termed High Press) that corresponds to its higher heating (see bold line termed Gas Cooler Inflow, *in* *figure 3A*). In this manner, as shown in figure 3A, shortly before the 40 minute point, the CO₂ exchanges more heat with the water in countercurrent, and on exit from exchanger the temperature drops again (see thin line called Supercooled CO₂), while on inflow into the heat exchanger it starts to climb again. In parallel manner, in figure 3B, it is evident that the power (in the abscissa on the left) in the first 40 minutes remains at a power lower than 800 W (thin line, identified as Watt appl). Afterward, with said closing of the electronic thermal expansion valve 34, power increases slightly. Similarly, after about 70 minutes, the temperature of the CO₂ on inflow is increased, like the temperature on outflow, thus activating again said control system. Once again then, the valve is driven to close to cause the above-mentioned rise of pressure and temperature, with a consequent increase in power of the compressor. This tendency is of gradual and step-wise type, as shown by the graphs, and makes it possible with small and gradual increments in power and in CO₂ pressure to reach temperatures of around 80°C with contained powers that do not exceed 900 W and corresponding pressures of not over 100 bar and that approach said values only in the final 10 minutes to bring the CO₂ to a temperature of 70 °C to 80 °C.

Conversely, as is shown in the graphs in figures 4A and 4B (the curves indicate the same points of reference of the previous figures), if the control of the electronic thermal expansion valve is not actuated, the outflow temperature of the CO₂ from the heat exchanger 32 remains always constant and below 20°C, its inflow temperature remains always constant and above 80°C, the pressure remains constant around 100 bar, and the power is maintained between 800 and 900 W.

Consequently, particularly in the comparison, respectively, between the power curves of the graphs of figure 3B, referring to the control of the thermal expansion valve, and of figure 4B referring to the absence of the control of the thermal expansion valve, it can be noted that in the case of control of the thermal expansion valve for the first 40 minutes the power absorbed by the compressor is lower than 800 W, while in the case without the control of the expansion valve the power is already between 800 and 900 W. In the subsequent 20 minutes, and up to 60 minutes, power reaches about 800 W at the most with said control, while without said control the power is always higher than 800 W. As already mentioned, the power levels with and without the control reach values that are nearly identical, that is, between 800 and 900 W, only in the last 10 minutes.

Thus it is evident that the gradual and step-wise tendency of the work of the heater with the control of the thermal expansion valve is more advantageous than is the case with the absence of said control, although the latter is always preferable with respect to the prior art systems.

The whole translates into high COP values that can reach about 3.8-4, considering a temperature of evaporation of the CO₂ of about 4°C, a temperature of the water feeding the evaporator of about 15°C and an ambient temperature of 23°C, a temperature of cold water in the tank of 15°C and a water flow rate feeding the evaporator of 15 litres a minute.

A further advantage of the present invention lies in the fact that it does not require the use of hydraulic pumps, which on one hand complicate the system and on the other hand absorb energy and lower the COP values.

Likewise, are also avoided cumbersome and complicated systems such as the arrangement of a plurality of tanks connected in series to obtain the layering of the water, which in this case too would require the use of a hydraulic pump.

In addition, it should be noted that with the heater of the present invention it is not necessary to have electrical resistance elements for the anti-legionella cycle (usually carried out at periodic intervals), since it is capable of reaching water temperatures approaching the boiling point without stopping the system when the temperature of the water in the lower part of the tank exceeds the critical temperature of the CO₂.

Further variants and modifications of the heater of the present invention can be made by a skilled person without departing from the scope of protection of the accompanying claims.

For example, the tank may have transversal cross sections other than those of a cylinder, such as a square cross section that can be inscribed in or can circumscribe a circle. The transversal cross section can be a long and narrow rectangle. In this case, the length to height ratio of the cross section will be calculated experimentally so as to obtain a stability of the gradient of the water temperature when warm water is drawn out or cold water is fed into the system.

In addition, it was found that it is possible to achieve a system of ordered convective movements using a structure similar to that of the devices previously criticized in which the coil of the heat pump is immersed in the tank. In fact, it was observed that by positioning the coil inside said first branch 23 on outflow from the bottom of the tank 2 and arranging the insertion of a cylindrical element between the turns, a sort of annular ordered convective flow is formed toward the inside wall of the duct that favours the flow of warm water toward the upper portion of the tank and a consequent drawing of cold water from the lower part of the tank.

## Claims

1. Heater (1) of heat-pump type for domestic hot water, comprising a water storage and supply tank (2) and a heat pump (3), said heat pump comprising in turn: at least one compressor (31) for a CO₂ working fluid, at least a first CO₂/water heat exchanger (32) operatively connected on one side to the circuit of the heat pump (3) and on the other side, in countercurrent, to a first cold water outflow branch (23) from said tank (2) and to a second warm water inflow branch (24) in said tank (2), a thermal expansion valve (34), a second heat exchanger (35) positioned between said expansion valve (34) and said at least one compressor (31), wherein it also includes a controller (36) connected respectively to said at least one compressor (31) and to temperature sensors (T1, T2) positioned inside said tank, **characterized in that** said tank (2) has a ratio of the diameter of its cross section to the height of at least 1:5, said first (23) and second (24) branches have a diameter of between 20 mm and 200 mm, and **in that** said first heat exchanger (32) is positioned at a lower level than the lower half of the height of said tank.

2. Heater (1) according to claim 1, in which the ratio of diameter of the cross section and the height of said tank (2) is at least 1:6-1:8.

3. Heater (1) according to claim 1 or 2, in which the diameter of said cross section of the tank (2) is 250 mm and the height is 2000 mm.

4. Heater (1) according to claim 1, 2 or 3, in which the diameter of the internal cross section of said first (23) and second (24) branches is included between 30 mm and 100 mm.

5. Heater (1) according to any of the claims from 1 to 4, wherein said at least one compressor (31) comprises a pair of compressors arranged in series.

6. Heater (1) according to any claims from 1 to 5, comprising moreover at least a first (T1) and a second (T2) temperature sensor positioned respectively toward the bottom and at halfway height in the tank (2), said first and second sensor being connected to said controller (36).

7. Heater (1) according to any claims from 1 to 6, in which said at least one first heat exchanger (32) is positioned at a level lower than said tank (2).

8. Heater (1) according to any claims from 1 to 7, wherein said at least one first heat exchanger (32) comprises two plate-type heat exchangers positioned in parallel to each other.

9. Heater (1) according to any claims from 1 to 8, wherein said controller (36) is respectively connected operatively to a temperature sensor (33) positioned immediately after the first heat exchanger (32) in the direction of flow of the CO2 and also connected to said expansion valve (34).

10. Method for heating domestic hot water comprising the stages of:
- providing a water storage and supply tank (2) according to claims 1, 2 or 3 filled with cold water from the water main;
- connecting said tank to at least one heat exchanger (32) of a CO₂ heat pump through two branches (23, 24) according to claims 1 or 4, so that said at least one heat exchanger is placed at a level lower than the halfway height of the tank;
- switching on the heat pump to create a natural convection movement inside said branches by means of the heat exchange between the hot CO₂ and the cold water so as to achieve inside the tank a constant stratification of the temperature of the water;
- controlling the temperature near the bottom of the tank so as to switch off the heat pump when the temperature detected reaches a predetermined value and a phase for controlling the temperature at about half the height of the tank so as to restart the heat pump when the temperature detected reaches a further predetermined value.

11. Method for heating water according to claim 10, also comprising a stage for controlling a thermal expansion valve (34) to vary the pressure of the CO₂ on outflow from a compressor (31) of the heat pump (3).

12. Method for heating water according to claim 11, wherein said control phase for the thermal expansion valve (34) comprises a stage for detecting the temperature of the CO₂ on outflow from the heat exchanger (32) so that if the temperature detected is the same as or higher than a preset critical value, the thermal expansion valve is actuated to close, whereas if the temperature detected is the same as or lower than a further preset critical value, the thermal expansion valve is actuated to open.

13. Method for heating water according to any one of claims 10 to 12, also comprising a stage for increasing the temperature in the upper portion of the tank by decreasing the inflow rate of warm water into the tank.

## Patentansprüche

1. Heizgerät (1) für Trinkwasser mit Wärmepumpe einschließlich einen Tank (2) für Speicherung und Versorgung und eine Wärmepumpe (3), die enthält: zumindest einen Kompressor (31) für ein CO₂-Arbeitsmittel, zumindest einen ersten CO₂/Wasser Wärmetauscher (32) operativ auf einer Seite an dem Kreislauf der Wärmepumpe (3) angeschlossen und auf die andere Seite in Gegenströmung an einem ersten Kaltwasser-Auslaufarm (23) aus diesem Tank (2) und an einem zweiten Warmwasser-Zulaufarm (24) in diesem Tank (2) angeschlossen, ein Expansionsventil (34), einen zweiten Wärmetauscher (35) zwischen dem genannten Expansionsventil (34) und dem genannten zumindest einen Kompressor (31), wobei dazu einen Regler (36) einschließt, der an dem genannten zumindest einen Kompressor (31) und an den im Tank positionierten Temperaturfühler (T1, T2) angeschlossen ist, gekennzeichnet von der Tatsache, dass der genannten Tank (2) ein Verhältnis von zumindest 1:5 zwischen das Diameter seines Querschnittes und seiner Höhe hat, die genannten ersten (23) und zweiten Arm (24) ein Diameter zwischen 20 mm und 200 mm haben, und dass der genannten ersten Wärmetauscher (32) unter die untere Hälfte der Höhe des genanntes Tanks positioniert ist.

2. Heizgerät (1) nach Anspruch 1, wo das Verhältnis zwischen das Diameter des Querschnittes und der Höhe des genanntes Speichers (2) zumindest 1:6 - 1:8 ist.

3. Heizgerät (1) nach Anspruch 1 oder 2, wo das Diameter des genannten Querschnittes des Tanks (2) 250 mm ist und die Höhe 2000 mm ist.

4. Heizgerät (1) nach Anspruch 1, 2 oder 3 wo das Diameter des inneren Abschnitts des ersten (23) und zweiten Armes (24) zwischen 20 mm und 100 mm eingeschlossen ist.

5. Heizgerät (1) nach irgendeinem Anspruch von 1 bis 4, wo der genannten zumindest einen Kompressor (31) eine Paar in Reihe geordneten Kompressoren einschließt.

6. Heizgerät (1) nach irgendeinem Anspruch von 1 bis 5 einschließend zumindest einen ersten (T1) und einen zweiten (T2) Temperaturfühler, die am unteren Punkt und zur Hälfte der Höhe des Tanks positioniert sind, und die genannten ersten und zweiten Fühler an der genannten Regler (36) angeschlossen sind.

7. Heizgerät (1) nach irgendeinem Anspruch von 1 bis 6, wo der genannten zumindest einen ersten Wärmetauscher (32) ist unter dem genannten Tank (2) positioniert.

8. Heizgerät (1) nach irgendeinem Anspruch von 1 bis 7, wo der genannten zumindest einen ersten Wärmetauscher (32) zwei Plattenwärmetauscher einschließt, die parallel positioniert sind.

9. Heizgerät (1) nach irgendeinem Anspruch von 1 bis 8, wobei einen Regler (36) einschließt ist, der an einem gleich nach dem Wärmetauscher (32) in Richtung des CO₂-Abflusses positionierten Temperaturfühler (33) operativ angeschlossen ist, und der am Expansionsventil (34) angeschlossen ist.

10. Methode für Warmwassererhitzung, der folgenden Phasen einschließt:
- Bereitstellung eines Tanks (2) für Speicherung und Versorgung des Wassers nach Ansprüche 1, 2 oder 3, mit Kaltwasser aus dem Wassernetz eingefüllt;
- Anschluss des genannten Tanks an zumindest einem Wärmetauscher (32) einer CO₂-Wärmepumpe zwei Arme (23, 24) nach Ansprüche 1 oder 4, so dass der genannten zumindest einen Wärmetauscher sich unten der Hälfte der Höhe des Speichers liegt;
- Anschaltung der Wärmepumpe, um eine natürliche konvektive Bewegung in den Arme mittels Wärmeaustausches zwischen warmes CO₂ und kaltes Wasser zu erzeugen, um eine konstante Stratifikation der Wassertemperatur im Tank zu erreichen.
- Kontrolle der Temperatur am unteren Punkt des Tanks, um die Wärmepumpe abzuschalten, wenn die Temperatur einen vorbestimmten Wert erreicht, und eine Phase für die Kontrolle der Temperatur an der Hälfte der Höhe des Tanks, um die Wärmepumpe wieder anzuschalten, wenn die Temperatur einen anderen vorbestimmten Wert erreicht.

11. Methode für Warmwassererhitzung nach Anspruch 10, der eine Kontrollphase eines Expansionsventils (34) einschließt, um den Druck des CO₂-Ausflusses aus einem Kompressor (31) der Wärmepumpe (3) zu ändern.

12. Methode für Warmwassererhitzung nach Anspruch 11, wo die genannte Kontrollphase des Expansionsventils (34) eine Phase für die Temperaturvermessung des aus dem Wärmetauscher (32) ausfließenden CO₂ einschließt, so dass, wenn die vermessene Temperatur gleich oder höher als einen kritischen vorbestimmten Wert ist, wird das Expansionsventil im Sperre gesteuert. Wenn dagegen die vermessene Temperatur gleich oder niedriger als einen anderen kritischen vorbestimmten Wert ist, wird das Expansionsventil dann in Öffnung gesteuert.

13. Methode für Warmwassererhitzung nach irgendeinem Anspruch von 10 bis 12, der eine Temperaturerhöhungsphase im oberen Abschnitt des Tanks einschließt, mittels der Senkung des im Tank zulaufenden Warmwasserdurchflusses.

## Revendications

1. Réchauffeur (1) du genre de la pompe à chaleur pour l'eau chaude domestique, qui comprend un réservoir d'accumulation et distribution de l'eau (2) et une pompe à chaleur (3), laquelle comprend à son tour : au moins un compresseur (31) pour un fluide alimenté à CO₂, au moins un échangeur de chaleur alimenté à CO₂/eau (32) en connexion opérative d'un coté au circuit de la pompe à chaleur et de l'autre coté, contre courant, au premier embranchement de sortie de l'eau chaude (23) du dit réservoir (2) et jusqu'au deuxième embranchement d'entrée de l'eau chaude (24) du dit réservoir (2), une valve d'expansion thermale (34), un deuxième échangeur de chaleur (35) positionné entre la dite valve (34) et au moins un des compresseur (31), et dans ça il y a aussi un dispositif de contrôle (36) connecté respectivement à au moins un compresseur (31) et aux sondes de température (T1, T2) positionné à l'intérieur du réservoir, **caractérisé par le fait que** le réservoir (2) a un rayon du diamètre de sa coupe transversale jusqu'à l'hauteur au moins de 1 :5 et les dits premier (23) et le deuxième (24) embranchement ont le diamètre entre 20 mm et 200 mm, et le premier échangeur de chaleur (32) se trouve à un niveau inférieur de la moitié inférieure de l'hauteur dudit réservoir.

2. Réchauffeur (1) comme dit dans la déclaration 1, dans lequel le rayon de la coupe transversale et l'hauteur du réservoir (2) est au moins 1:6 - 1:8.

3. Réchauffeur (1) comme dit dans les déclarations 1 et 2, dans lequel le diamètre de la dite coupe transversale du réservoir (2) est 250 mm et l'hauteur est de 2000 mm.

4. Réchauffeur (1) comme dit dans les déclarations 1, 2 et 3, dans lequel le diamètre de la coupe transversale intérieure du premier (23) e deuxième (24) embranchement mesure entre 30 mm et 100 mm.

5. Réchauffeur (1) comme dit dans les déclarations à partir de 1 jusqu'à 4, dans lequel au moins un compresseur (31) comprend une couple de compresseurs qui sont arrangés en série.

6. Réchauffeur (1) comme dit dans les déclarations précédentes, qui comprend en outre au moins une première (T1) et une seconde (T2) sonde de température positionnés respectivement au fond et à demi-hauteur dans le réservoir (2), les dites première et seconde sonde étant connectées au dit dispositif de contrôle.

7. Réchauffeur (1) comme dit dans les déclarations précédentes, dans lequel au moins le premier échangeur de chaleur est positionné à un niveau inférieur par rapport au réservoir.

8. Réchauffeur (1) comme dans les déclarations précédentes, dans lequel au moins un premier échangeur de chaleur (32) se compose de deux échangeur de chaleur du genre plat positionnés l'un parallèle de l'autre.

9. Réchauffeur (1) comme dit dans les déclarations précédentes, ou le dit dispositif de contrôle (36) est connecté respectivement de façon opérative à une sonde de température (33) positionnée immédiatement après le premier échangeur de chaleur (32) dans la direction du flux de CO2 et aussi connecté à ladite valve d'expansion (34).

10. Méthode de réchauffement de l'eau chaude domestique se compose de ces phases :
• Fournir une réserve d'eau et un réservoir d'accumulation (2) comme dans les déclarations 1, 2 ou 3 repli d'eau froide de la canalisation de l'eau.
• Connecter le réservoir à au moins un échangeur de chaleur (32) d'une pompe à chaleur à CO2 à travers les deux embranchements installé (23, 24) comme dit dans les déclarations 1 ou 4, de façon qu'au moins un échangeur de chaleur est position se trouve à un niveau inférieur par rapport à l'hauteur du réservoir.
• Allumer la pompe à chaleur pour créer un mouvement naturel de convection dans les embranchements par l'aide de l'échange de chaleur entre le CO2 chaud et l'eau froide afin de achever une constante stratification de la température de l'eau à l'intérieur du réservoir.
• Controller la température près du fond du réservoir de façon que la pompe à chaleur s'éteint quand la température enregistrée atteint une valeur prédéterminée et une phase de contrôle de la température plus ou moins à la moitié de l'hauteur du réservoir de façon que la pompe à chaleur s'allume quand la température enregistrée atteint la valeur déterminée auparavant.

11. Méthode de réchauffement de l'eau comme dit dans la déclaration 10, qui comprend aussi une phase de contrôle de la valve d'expansion thermale (34) pour varier la pression du CO2 pendant la sortie du compresseur (31) de la pompe de chaleur (3).

12. Méthode de réchauffement de l'eau comme dit dans la déclaration 11, dans lequel la phase de contrôle de l'expansion de la valve thermale (34) comprend un niveau de détection de la température du CO2 pendant la sortie du échangeur de chaleur (32) de façon que, si la température détectée est égal ou supérieur au niveau critique présélectionné, la valve d'expansion thermale se ferme, tandis que si la température détectée est égal ou inférieur du niveau critique sélectionné auparavant, la valve d'expansion thermale s'ouvre.

13. Méthode de réchauffement de l'eau comme dit dans les déclarations de 10 à 12, qui comprend aussi un niveau d'augmentation de la température dans la portion supérieur du réservoir, obtenu par la diminution du taux de entrée de l'eau chaude dans le réservoir
